# EUROPÄISCHE PATENTANMELDUNG

(11) **EP 2 189 863 A1**
(43) Veröffentlichungstag der Anmeldung: **26.05.2010**
(21) Anmeldenummer: 09014586.3
(22) Anmeldetag: 24.11.2009
(51) Int. Cl.: G05B 23/02

(54) **Verfahren zur Erfassung eines Maschinenzustandes**

(30) Priorität: 25.11.2008 DE 102008058965
(71) Anmelder: Robert Bosch GmbH, 70469 Stuttgart (DE)
(72) Erfinder: Romoser, Oliver, 74321 Bietigheim (DE); Stiedl, Thomas, 71254 Ditzingen (DE)
(74) Vertreter: Thürer, Andreas

(57) **Zusammenfassung**

Die vorliegende Erfindung betrifft ein Verfahren zur Erfassung eines Maschinenzustandes durch Messung wenigstens einer Größe, sog. Condition Monitoring, wobei die wenigstens eine Größe gemessen wird und die Messwerte (111, 112, 113) mit dem Steuerungsablauf (201, 202, 203) der Maschine verknüpft werden.

## Beschreibung

Die vorliegende Erfindung betrifft ein Verfahren zur Erfassung eines Maschinenzustandes durch Messung wenigstens einer Größe, ein entsprechendes Computerprogramm sowie ein entsprechendes Computerprogrammprodukt.

### Stand der Technik

Es ist bekannt, Maschinenzustände durch Messung geeigneter Größen zu überwachen (sog. Condition Monitoring), um die Sicherheit und Maschineneffizienz zu erhöhen. Dazu werden die einzelnen Maschinenkomponenten mit verschiedenen Sensoren ausgestattet, die geeignete Größen wie z.B. Schall oder Schwingungen der Komponenten messen bzw. erfassen und die Messwerte einem Auswertesystem zuführen. Das Auswertesystem wertet die Messwerte aus, um beispielsweise Sicherheitsprobleme schnell erkennen zu können und die Maschine abzuschalten oder den Maschinenzustand langfristig zu überwachen, um auszutauschende bzw. instand zu setzende Maschinenkomponenten zu identifizieren. Diese Überwachung löst die bisher übliche präventive Instandhaltung ab, bei der in festen Zeitabständen Maschinenkomponenten überprüft bzw. ausgetauscht werden. Dies führt häufig dazu, dass intakte Bauteile ausgetauscht und vorhandene Restlaufzeiten nicht genutzt werden.

Nachteilig an der bekannten Lösung ist jedoch, dass die Ausstattung von Maschinen mit entsprechenden Erfassungseinrichtungen relativ aufwendig ist, da sämtliche zu überprüfende Komponenten mit einem oder mehreren Sensoren ausgerüstet werden müssen. Weiterhin unterliegen die Messwerte während des Betriebs der Maschine Störungen, die durch den normalen Bearbeitungsprozess hervorgerufen werden (z.B. Geräusch durch zerspanende Bearbeitung usw.), sodass die Maschinenüberwachung oftmals außerhalb des Bearbeitungsprozesses erfolgen muss. Insbesondere bei komplexen Anlagen treten Probleme auf, da sich mit steigender Anlagenkomplexität eine immer größere Anzahl von Signalen überlagert.

Es ist somit erwünscht, ein Verfahren zur Überwachung eines Maschinenzustahdes anzugeben, dessen Bereitstellung weniger aufwendig ist und dass auch während des Bearbeitungsprozesses ausführbar ist.

Erfindungsgemäß werden ein Verfahren zur Erfassung eines Maschinenzustandes durch Messung wenigstens einer Größe, ein entsprechendes Computerprogramm sowie ein entsprechendes Computerprogrammprodukt mit den Merkmalen der unabhängigen Patentansprüche vorgestellt. Bevorzugte Ausgestaltungen sind Gegenstand der Unteransprüche und der nachfolgenden Beschreibung.

Es ist wünschenswert, Veränderungen an Fertigungseinrichtungen, z.B. aufgrund von Verschleiß oder Manipulation, sicher erkennen zu können und einen detaillierten Hinweis auf die veränderte Komponente oder Funktion ohne aufwendige Konfiguration und Parametrisierung zu erhalten.

### Vorteile der Erfindung

Typisch für Anlagen der Montagetechnik, Sondermaschinen oder auch Verpackungsmaschinen ist, dass nicht alle Maschinenkomponenten zeitgleich im Eingriff oder Betrieb sind. Vielmehr werden die einzelnen Funktionen nacheinander in einer im Steuerungsablauf definierten Steuerungssequenz abgerufen. Erfindungsgemäß wurde erkannt, dass somit Sensorsignale über Berücksichtigung des Steuerungsablaufs direkt einer Maschinenkomponente zugeordnet werden können und somit ein Sensor mehrere Komponenten überwachen kann, wozu im Stand der Technik noch mehrere Sensoren nötig sind.

Durch die erfindungsgemäße Lösung können somit die Kosten für Sensorik und deren Installation deutlich reduziert werden. Es wird idealerweise je Fertigungseinheit (z.B. eine Station einer Montagelinie) nur ein Satz von Sensoren benötigt. Weiterhin ist der Aufwand zur Konfiguration der Überwachung deutlich reduziert. Durch die Verknüpfung der Sensorsignale mit dem Steuerungsablauf kann eine Veränderung direkt einer Maschinenfunktion (Komponente) zugeordnet werden. Darüber hinaus werden nur geringe Rechenressourcen für die Auswertealgorithmen benötigt. Die Kombination der Sensorsignale erhört den Informationsgehalt, sodass einfache mathematische Funktionen für die Auswertung ausreichen. Dadurch ist es möglich, die Systematik ohne zusätzliche CPU-Ressourcen in bestehende Anlagensteuerungen zu integrieren. Der Steuerungsablauf wird zweckmäßigerweise durch (digitale) Signale innerhalb der Steuerung definiert.

Vorzugsweise wird eine Größe von wenigstens zwei Maschinenkomponenten mittels eines einzigen Sensors gemessen, wobei eine Zuordnung zwischen Messwert und Maschinenkomponente anhand des Steuerungsablaufs erfolgt. Gemäß einer weiter bevorzugten Ausführungsform wird eine Größe aller Maschinenkomponenten mittels eines einzigen Sensors gemessen. Alle Veränderungen von Maschinenkomponenten äußern sich ab einem bestimmten Stadium durch ein verändertes Verhalten der Komponenten zur Umwelt. Z.B. erzeugen sie mehr Lärm und Schwingungen oder sie verbrauchen mehr Energie. Dieses Verhalten kann an zentraler Stelle sensorisch erfasst werden. D.h. nicht jede Komponente wird mit Sensoren ausgestattet, stattdessen erhält die Maschine an repräsentativen Positionen einen Sensor. Um den Bezug von der Signaländerung zum Verursacher herzustellen, wird eine Verknüpfung mit dem Steuerungsablauf ausgeführt. Der Steuerungsablauf der Anlagensteuerung (SPS) beinhaltet die Information, welche Komponente zu welchem Zeitpunkt aktiv ist.

Vorteilhafterweise ist die wenigstens eine Größe ein Luftverbrauch, eine Gesamt-Stromaufnahme, ein Luftschall, eine Schwingung und/oder ein Motorstrom. Der Luftverbrauch wird vorzugsweise nach der Versorgungseinheit am Einspeisepunkt der Druckluft in die Maschine gemessen. Die Stromaufnahme wird vorzugsweise nach dem Hauptschalter der Maschine gemessen. Der Luftschall wird vorzugsweise innerhalb und optional außerhalb der Maschinenumhausung gemessen, wobei bei der Messung auf beiden Seiten durch die so mögliche Differenzbildung der Signale maschinenexterne Störgeräusche vermindert werden können. Schwingung werden vorzugsweise am Maschinengestell gemessen. Weitere Signale, die bereits für die Steuerung und Regelung der Maschine sensorisch von der Steuerung erfasst wurden, wie z.B. Motorströme oder Prozessparameter, können ebenso, zur Überwachung verwendet werden.

Die Sensorsignale werden vorzugsweise über entsprechende Eingänge direkt in der Maschinensteuerung erfasst. Hierbei wird auf dem Stand der Technik entsprechende Methoden zurückgegriffen wie z.B. Analog-Digital-Wandler. Durch die direkte Erfassung ist gewährleistet, dass die Sensorsignale und der von der Steuerung verwaltete Steuerungsablauf zeitsynchron in der Steuerung vorliegen.

Gemäß einer bevorzugten Ausgestaltung der Erfindung werden zur Verknüpfung der Messwerte mit dem Steuerungsablauf der Maschine zu jedem Teilsegment des Steuerungsablaufs, auch Ablaufschritt genannt, aus jedem der Messwerte ein oder mehrere Kennwerte ermittelt. Ein Kennwert kann z.B. der Maximalwert eines Messwerts innerhalb des Ablaufschrittes sein. Alle Kennwerte, die während eines Ablaufschrittes ermittelt werden, bilden das charakteristische Abbild der Maschinenfunktion (Maschinenkomponente) die während des zeitsynchron ablaufenden Schrittes von der Steuerung angesteuert wird. Alle Abbilder der einzelnen Maschinenfunktionen in Summe ergeben das Maschinenabbild.

Zweckmäßigerweise ist ein Referenz-Abbild der Maschinenfunktion und/oder der Anlage vorgesehen, mit dem das charakteristische Abbild der Maschinenfunktion und/oder der Maschine verglichen wird, um den Maschinenzustand zu erfassen. Vorteilhafterweise sieht die Erfindung vor, dass über verschiedene Methoden eine Referenz des Maschinenabbildes gebildet werden kann. Es ist möglich, Referenzwerte anhand von Erfahrungswerten manuell festzulegen. Weiterhin ist es möglich, Referenzwerte anhand von Messungen einer als "gut" bewerteten Maschine festzulegen. Weiterhin können Referenzwerte von einer identischen Maschine übernommen werden. Auch können bekannte Referenzwerte einzelner Maschinenkomponenten gemäß deren konstruktiven Anordnung und zeitlichen Ansteuerung kombiniert werden.

Gemäß einer bevorzugten Ausgestaltung wird der Maschinenzustand kontinuierlich überwacht, indem die Kennwerte gegen die Referenz geprüft werden. Wenn festgelegte Toleranzgrenzen verletzt werden, erfolgt zweckmäßigerweise eine Meldung an den Maschinenbediener.

Eine erfindungsgemäße Recheneinheit ist, insbesondere programmtechnisch, dazu eingerichtet, ein erfindungsgemäßes Verfahren durchzuführen.

Die Erfindung betrifft zudem ein Computerprogramm mit Programmcodemitteln, um alle Schritte gemäß einem erfindungsgemäßen Verfahren durchzuführen, wenn das Computerprogramm auf einem Computer oder einer entsprechenden Recheneinheit, insbesondere in einer SPS, ausgeführt wird.

Das erfindungsgemäß vorgesehene Computerprogrammprodukt mit Programmcodemitteln, die auf einem computerlesbaren Datenträger gespeichert sind, ist zum Durchführen aller Schritte gemäß einem erfindungsgemäßen Verfahren ausgebildet, wenn das Computerprogramm auf einem Computer oder einer entsprechenden Recheneinheit, insbesondere in einer SPS, ausgeführt wird. Geeignete Datenträger sind insbesondere Disketten, Festplatten, Flash-Speicher, EEPROMs, CD-ROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im folgenden unter Bezugnahme auf die Zeichnung ausführlich beschrieben.

### Figurenbeschreibung

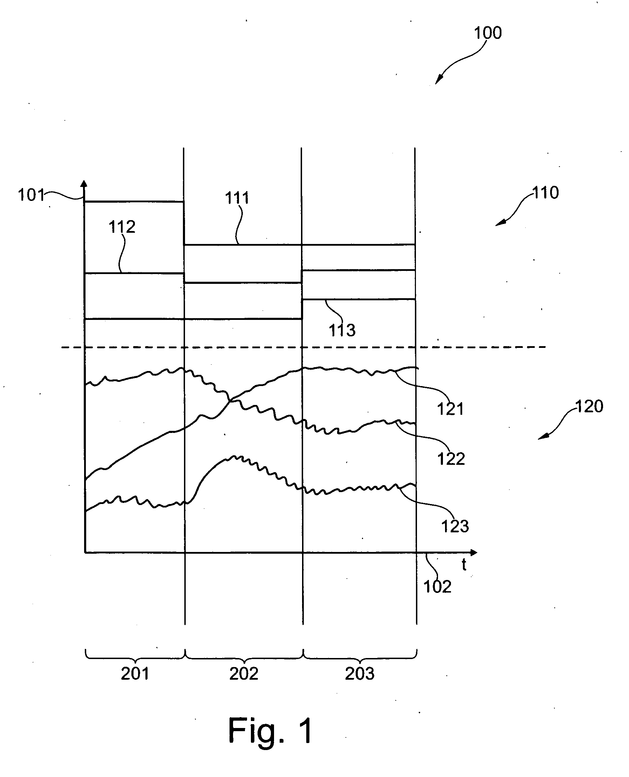

- Figur 1: zeigt schematisch eine Verknüpfung des Steuerungsablaufs einer Maschine mit Messwerten einer Anzahl von Sensoren gemäß einer bevorzugten Ausgestaltung der Erfindung.

In Figur 1 ist schematisch dargestellt, wie einzelne Teilsegmente bzw. Ablaufschritte 201, 202, 203 eines Steuerungsablaufs kennzeichnende Signale 111, 112, 113 mit einer Reihe von Messwerten bzw. Messwertverläufen 121, 122, 123 verknüpft werden, um einen Maschinenzustand zu erfassen. In einem Diagramm 100 sind verschiedene Signalverläufe auf einer y-Achse 101 gegen die Zeit t auf einer x-Achse 102 aufgetragen. Das Diagramm 100 umfasst einen ersten Bereich 110, der die die Ablaufschritte 201, 202, 203 kennzeichnenden Signale 111, 112, 113, beispielsweise Steuersignale einer SPS, beinhaltet. Weiterhin weist das Diagramm 100 einen zweiten Bereich 120 auf, der die Messwertverläufe 121, 122, 123 der erfassten Größen beinhaltet.

Da der Steuerungsablauf der Maschine bekannt ist, ist es möglich, diesen Steuerungsablauf anhand der Signale 111, 112, 113 im ersten Bereich 110 in die Ablaufschritte 201, 202, 203 zu unterteilen.

Das Signal 111 kann beispielsweise die Ansteuerung eines Motors repräsentieren. Das Signal 112 kann beispielsweise zur Ansteuerung eines Ventils verwendet werden usw. Es versteht sich, dass zur Einteilung des Steuerungsablaufs in Ablaufschritte alle insbesondere innerhalb der Steuerung vorhandenen Signale verwendet werden können.

In dem zweiten Bereich 120 sind im vorliegenden Beispiel drei Messwertverläufe 121, 122 und 123 von verschiedenen Größen dargestellt. Beispielsweise kann es sich bei der durch den Messwertverlauf 121 repräsentierten Größe um den Luftverbrauch nach der Versorgungseinheit am Einspeisepunkt der Druckluft in die Maschine handeln. Weiterhin kann es sich bei der durch den Signalverlauf 122 repräsentierten Größe beispielsweise um die Stromaufnahme der Maschine nach dem Hauptschalter handeln usw. Vorzugsweise wird die zugrunde liegende Maschine mit einer Anzahl von Sensoren an repräsentativen Stellen ausgestattet, um den Maschinenzustand mit möglichst wenig Sensoren erfassen zu können.

Gemäß einer bevorzugten Ausgestaltung der Erfindung werden Kennwerte der Messwerte innerhalb der Ablaufschritte 201, 202, 203 ermittelt. Die Kennwerte können beispielsweise einen Maximal-, Minimal- oder Mittelwert, eine Steigung usw. umfassen.

Zur Erfassung des Maschinenzustands werden die ermittelten Kennwerte für jeden Ablaufschritt 201, 202, 203 mit zuvor ermittelten oder anderweitig bestimmten Referenzwerten verglichen. Weichen die Kennwerte zu sehr von den Referenzwerten ab, kann ein Fehlverhalten einer Maschinenkomponente vorliegen oder bevorstehen.

Mit der erfindungsgemäßen Lösung kann daher eine umfängliche Erfassung eines Maschinenzustandes unter Verwendung nur weniger, insbesondere zentral angeordneter, Sensoren durchgeführt werden.

Es versteht sich, dass in der dargestellten Figur nur eine beispielhafte Ausführungsform der Erfindung dargestellt ist. Daneben ist jede andere Ausführungsform denkbar, ohne den Rahmen dieser Erfindung zu verlassen.

## Patentansprüche

1. Verfahren zur Erfassung eines Maschinenzustandes durch Messung wenigstens einer Größe,
wobei die wenigstens eine Größe gemessen wird und die Messwerte (121, 122, 123) mit dem Steuerungsablauf (201, 202, 203) der Maschine verknüpft werden.

2. Verfahren nach Anspruch 1, wobei eine Größe von wenigstens zwei Maschinenkomponenten mittels eines einzigen Sensors gemessen wird, wobei eine Zuordnung zwischen Messwert (121, 122, 123) und Maschinenkomponente anhand des Steuerungsablaufs (201, 202, 203) erfolgt.

3. Verfahren nach Anspruch 2, wobei eine Größe aller Maschinenkomponenten mittels eines einzigen Sensors gemessen wird.

4. Verfahren nach einem der vorstehenden Ansprüche, wobei der Steuerungsablauf (201, 202, 203) anhand von Steuerungssignalen (111, 112, 113) bestimmt wird.

5. Verfahren nach einem der vorstehenden Ansprüche, wobei die wenigstens eine Größe ein Luftverbrauch, eine Gesamt-Stromaufnahme, eine Luftschall, eine Schwingung und/oder ein Motorstrom ist.

6. Verfahren nach Anspruch einem der vorstehenden Ansprüche, wobei die Sensorsignale über entsprechende Eingänge direkt in der Maschinensteuerung erfasst werden.

7. Verfahren nach einem der vorstehenden Ansprüche,
wobei zur Verknüpfung der Messwerte (121, 122, 123) mit dem Steuerungsablauf der Maschine zu jedem Teilsegment des Steuerungsablaufs aus jedem der Messwerte (121, 122, 123) wenigstens ein Kennwert ermittelt wird.

8. Verfahren nach Anspruch 7, wobei der wenigstens eine Kennwert einem charakteristischen Abbild der Maschinenfunktion und/oder der Maschine zugeordnet wird, das mit einem Referenz-Abbild verglichen wird.

9. Verfahren nach Anspruch 8, wobei der
Maschinenzustand kontinuierlich erfasst wird, indem der wenigstens eine Kennwert kontinuierlich mit dem Referenz-Abbild verglichen wird.

10. Recheneinheit, die dazu eingerichtet ist, ein Verfahren nach einem der vorstehenden Ansprüche durchzuführen.

11. Computerprogramm mit Programmcodemitteln, um alle Schritte eines Verfahrens nach einem der Ansprüche 1 bis 9 durchzuführen, wenn das Computerprogramm auf einem Computer oder einer entsprechenden Recheneinheit ausgeführt wird.

12. Computerprogrammprodukt mit Programmcodemitteln, die auf einem computerlesbaren Datenträger gespeichert sind, um alle Schritte eines Verfahrens nach einem der Ansprüche 1 bis 9 durchzuführen, wenn das Computerprogramm auf einem Computer oder einer entsprechenden Recheneinheit ausgeführt wird.
